# FASCICULE DE BREVET EUROPEEN

(11) **EP 0 765 792 B1**
(45) Date de publication et mention de la délivrance du brevet: **10.11.1999**
(21) Numéro de dépôt: 96420304.6
(22) Date de dépôt: 26.09.1996
(51) Int. Cl.: B62B 15/00

(54) **Article de glisse pour le sport ou les loisirs**
Gleitvorrichtung für Sport oder Freizeit
Sliding device for sport or leisure

(30) Priorité: 29.09.1995 FR 9511686
(43) Date de publication de la demande: 02.04.1997
(73) Titulaire: ETABLISSEMENTS GEORGES DAVID, 01100 Oyonnax (FR)
(72) Inventeur: David, Georges, 01100 Oyonnax (FR); Tiradon, Michel, 01100 Oyonnax (FR)
(74) Mandataire: Myon, Gérard Jean-Pierre

(56) Documents cités:
- DE-A- 2 124 020
- DE-A- 2 913 497
- DE-U- 9 301 845
- FR-A- 1 352 758
- NL-A- 8 800 968
- US-A- 3 366 395
- US-A- 3 580 598

## Description

La présente invention a trait à des perfectionnements apportés aux articles de glisse pour le sport et les loisirs et en particulier aux luges réalisées en matière plastique. Il existe sur le marché des luges en matière plastique constituées d'une coque dans laquelle s'assoit l'utilisateur qui, pour diriger l'engin en question, agit soit sur deux leviers latéraux venant en contact frottant avec la surface sur laquelle la luge glisse, soit sur un élément de direction constitué par un volant relié à des patins en forme de ski.

Le plus souvent, ces luges sont constituées d'un corps avec une paroi simple. Ceci a, en particulier, pour conséquence le fait que la basse température de la neige sur laquelle glisse la luge est transmise à travers cette paroi à l'utilisateur qui est assis dans la luge. De plus, cette paroi simple ne permet pas d'amortir les chocs ou les irrégularités de la surface sur laquelle glisse la luge et le confort d'un tel article de glisse est très limité.

Par la demande de brevet français 2 713 185, on connaît une planche à neige essentiellement constituée d'un patin réalisé en matière plastique par un procédé de soufflage et qui présente une double paroi. Cette planche à neige n'est pas munie d'un moyen de direction.

Si une luge de ce type est équipée d'un moyen de direction, tel qu'un patin, les efforts dynamiques transmis au corps de la luge au cours de son mouvement de glisse sur la neige sont violents, à cause des accélérations importantes subies du fait des irrégularités de la neige ou des courbures de la trajectoire choisie par l'utilisateur. Ces efforts important sont de nature à déformer le corps de la luge dans des zones locales de la double paroi au voisinage du moyen de direction. De plus, lorsque les éléments de direction comprennent un axe, qui traverse la luge et auquel est raccordé un moyen de préhension tel qu'un volant, comme cela est décrit dans US-A-3,366,395 ou FR-A-1 352 758, les efforts exercés par l'utilisateur qui se cramponne au volant ont tendance à faire bouger l'élément de direction à l'intérieur du trou du corps de la planche à neige. Les déformations qui peuvent en résulter peuvent être permanentes et rendre l'article inutilisable.

L'invention résout l'ensemble de ces problèmes.

Elle concerne un article de glisse pour le sport ou le loisir destiné à permettre à un utilisateur de glisser sur une surface neigeuse, ledit article comportant un corps présentant une double paroi et comprenant un trou dans lequel est disposée une partie au moins d'un élément de direction caractérisé en ce qu'une entretoise est formée, autour de cette partie de l'élément de direction, par deux manchons insérés dans ce trou, vissés l'un sur l'autre et munis chacun d'une collerette en appui sur une face du corps.

Grâce à l'invention, la surface du corps de l'article de glisse n'est pas déformée même en cas d'efforts violents car l'entretoise formée des deux manchons vissés l'un sur l'autre absorbe l'essentiel de ces efforts et la collerette de ses manchons permet leur répartition radiale.

Selon une variante particulièrement avantageuse de l'invention, l'article de glisse comprend au moins une nervure de rigidification obtenue par déformation de la paroi inférieure du corps sous une partie de la paroi supérieure du corps. Grâce à cet aspect de l'invention, la surface de l'article de glisse peut être augmentée, par exemple pour permettre son utilisation par un adolescent ou un adulte. En effet la nervure de rigidification contribue à la bonne tenue dynamique de l'article de glisse de l'invention.

Selon un autre aspect avantageux de l'invention, l'arbre de direction d'un patin est logé dans l'entretoise formée par les deux manchons. Ceci permet d'obtenir une structure rigide et solide qui peut absorber sans se déformer les efforts subis lors du trajet de l'article sur une surface neigeuse irrégulière. En particulier, l'axe de l'élément de direction porte un épaulement extérieur destiné à venir en butée contre un épaulement intérieur d'un des manchons formant l'entretoise. Cette butée permet aussi d'absorber les efforts provenant de la force de réaction de la surface neigeuse par rapport au poids propre de l'article et de l'utilisateur.

L'invention sera mieux comprise et d'autres avantages de celleci apparaîtront plus clairement à la lumière de la description qui va suivre d'un mode de réalisation d'un article de glisse conforme à son principe, donnée uniquement à titre d'exemple et faite en référence aux dessins annexés dans lesquels :
- la figure 1 est une vue en perspective d'un article de glisse conforme à l'invention ;
- la figure 2 est une vue en coupe selon la ligne II-II de la figure 1 ;
- la figure 3 est une vue en coupe selon la ligne III-III de la figure 2 ;
- la figure 4 est une vue en coupe selon la ligne IV-IV de la figure 2 et
- la figure 5 est une vue éclatée de la structure de direction de l'article de la figure 1.

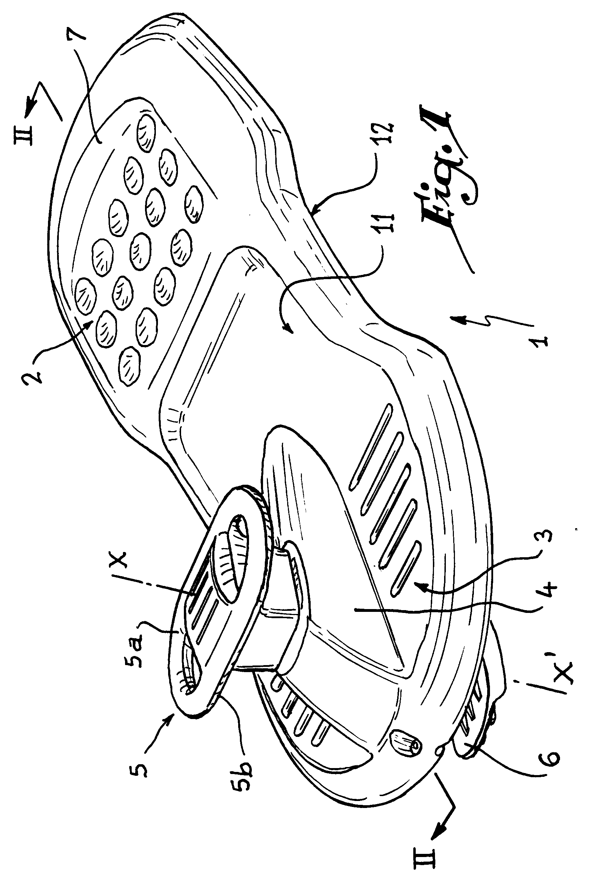

L'article de la figure 1 est essentiellement constitué d'un corps 1 formant siège 2 et comprenant une partie avant 3 sur laquelle reposent les pieds d'un utilisateur, de part et d'autre d'une nervure centrale 4 dans laquelle est disposée une structure de direction dont sont apparents un volant 5 situé au-dessus de la face supérieure du corps 1 et un patin 6, en forme de ski orientable en fonction de la rotation du volant 5 autour d'un axe XX'. Un dossier 7 est formé par un bourrelet disposé à l'arrière du siège 2.

Comme il est visible à la figure 2, le corps 1, obtenu par soufflage, présente une double paroi, c'est-à-dire est formé d'une paroi supérieure 11, visible à la figure 1, et d'une paroi inférieure 12 destinée à être en contact avec la surface neigeuse sur laquelle doit glisser l'article. D'une manière connue en soi, le corps 1 est muni d'excroissances longitudinales 13 destinées à stabiliser l'article lorsqu'il glisse.

L'article est pourvu de nervures de rigidifications 15, 16 et 16' obtenues par déformation de la partie inférieure 12 de la double paroi vers le haut, c'est-à-dire vers l'intérieur du corps 1. Alors que l'aspect de la face la plus visible du corps 1, c'est-à-dire la paroi 11, n'est pas modifié, les nervures 15, 16 et 16' rigidifient l'ensemble du corps 1. Grâce à ces nervures, on peut prévoir que le corps 1 a une taille suffisante pour permettre son utilisation par un adolescent ou un adulte sans être déformé par le poids de l'utilisateur.

La nervure 15 est située sous le siège 2 afin d'absorber l'essentiel des forces dues au poids de l'utilisateur. Selon une variante de l'invention non représentée, plusieurs nervures pourraient être formées sous le siège 2, dans le sens de l'axe de symétrie du corps 1 ou perpendiculairement à cet axe.

Les nervures 16 et 16' sont disposées de part et d'autre d'un trou 18 formé dans la paroi inférieure 12 pour ménager le passage de la structure de direction reliant le volant 5 au patin 6. Un trou analogue 19 est formé dans la paroi supérieure 11. Les deux trous 18 et 19 sont matérialisés par des retours 20 ou 21 de la matière formant les parois 11 et 12 vers l'intérieur du corps.

Une excellente rigidité a été obtenue lorsque les parois 11 et 12 sont en contact au niveau des nervures 15, 16 et 16' car les efforts supportés par la paroi inférieure 12 sont alors en partie repris par la paroi supérieure 11. Comme les nervures sont formées lors de l'opération de soufflage, le contact entre les parois a lieu alors que le matériau formant le corps 1 est encore pâteux et les deux parois 11 et 12 peuvent être soudées au niveau des nervures 15, 16 et 16', ce qui améliore encore la rigidité.

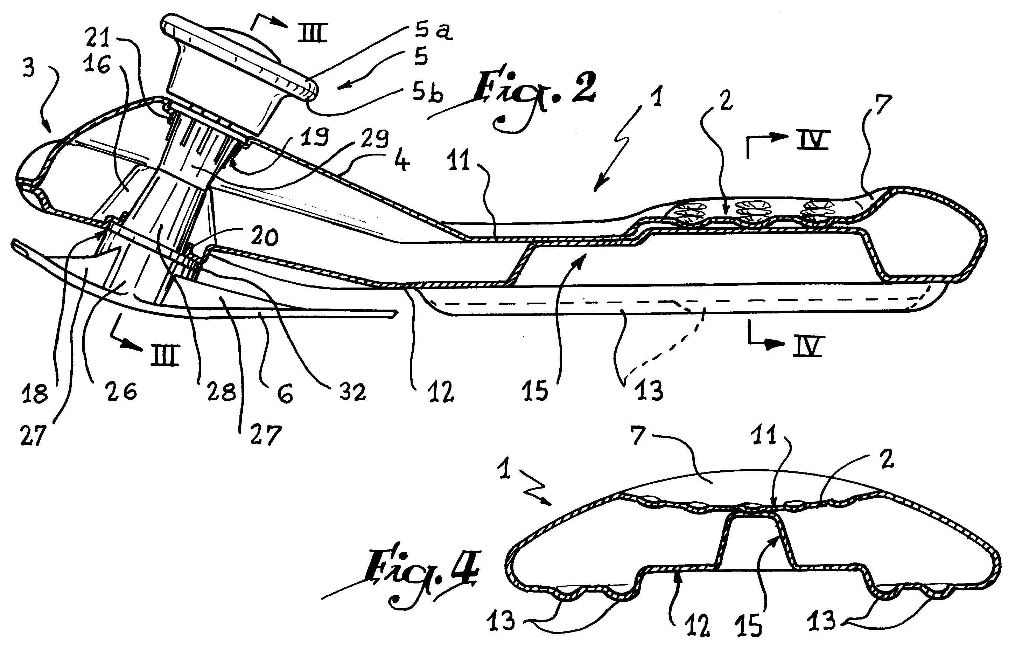

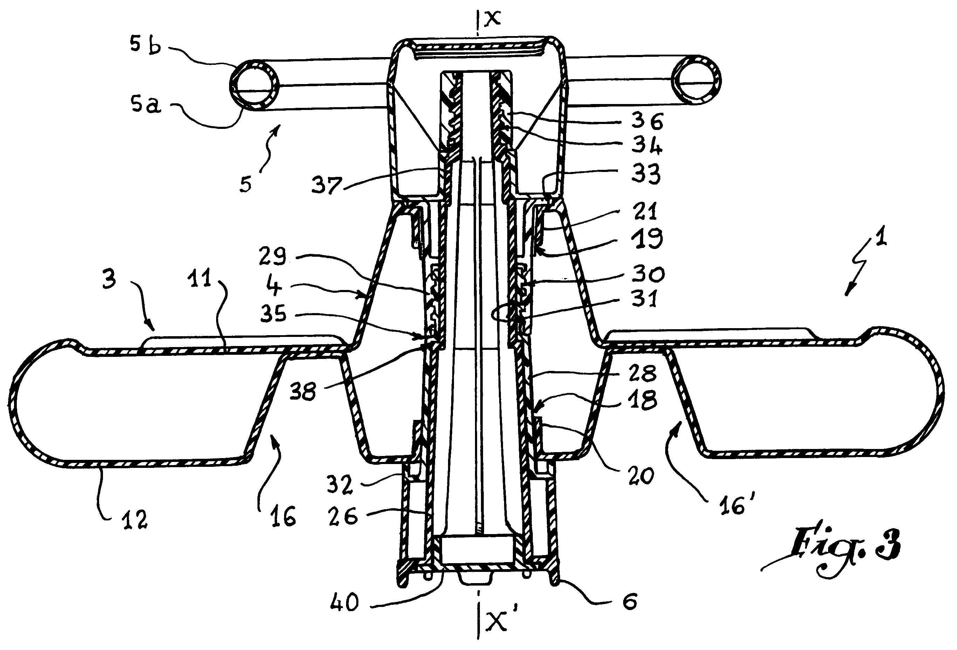

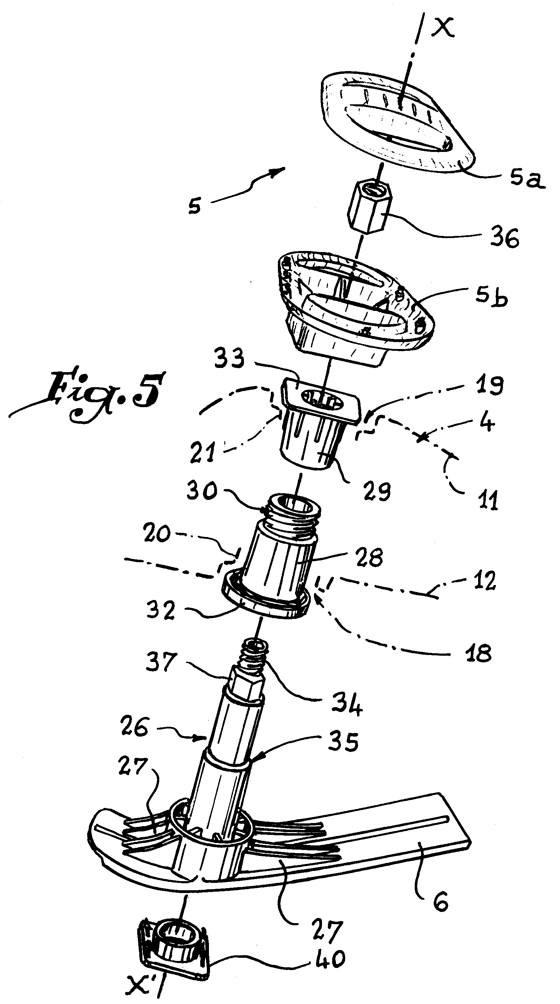

La structure de direction, telle qu'elle apparaît en particulier à la figure 5, concourt aussi à la rigidité de l'ensemble. Le patin 6 est prolongé par un arbre 26 venu de matière avec le patin 6, plusieurs nervures 27 étant disposées autour de la ligne de raccordement entre le patin 6 et l'arbre 26.

Conformément à l'invention, deux manchons 28 et 29 sont reliés grâce à un filetage externe 30 disposé sur l'un d'entre eux et un filetage interne 31 disposé sur l'autre manchon. Au cours du montage, le manchon 28 est inséré dans le trou 18 alors que le manchon 29 est logé dans le trou 19, puis les deux manchons sont vissés l'un sur l'autre jusqu'à ce qu'une collerette 32 du manchon 28 et une collerette 33 du manchon 29 viennent respectivement en appui sur les parois 12 et 11. Ainsi, les manchons 28 et 29 forment une entretoise, rigide et fermement maintenue en place par rapport au corps 1, qui entoure l'arbre 26.

La matière des retours 20 et 21 n'est pas jointive dans la partie centrale creuse du corps 1 car la rigidité obtenue grâce à l'invention est suffisante pour supporter, sans déformation notable, les efforts subis par le corps dans la zone des trous 18 et 19. Ceci évite une étape complexe dans la fabrication du corps 1.

L'arbre 26 est pourvu d'un filetage externe 34 et d'un épaulement 35. Un écrou 36 est prévu pour coopérer avec le filetage 34 en emprisonnant la partie inférieure 5a du volant 5. La partie supérieure 5b du volant 5 est fixée, par exemple par clipsage, sur la partie inférieure. La partie inférieure 5a du volant 5 est avantageusement pourvue d'un trou hexagonal dont les dimensions sont juste supérieures à celles de la partie supérieure 37 de l'arbre 26 située en dessous du filetage 34. Ainsi, lorsque le volant 5 est maintenu en position par l'écrou 36 sur l'arbre 26, tout couple exercé sur le volant par l'utilisateur est transmis à l'arbre 26 et au patin 6. De même, toute force selon l'axe XX' est transmise du volet 5 à l'arbre 26.

Un épaulement interne 38 est façonné à l'intérieur du manchon 28 pour coopérer avec l'épaulement externe 35 de l'arbre 26 afin de transmettre à l'entretoise rigide formée par les deux manchons 28 et 29 les forces de réaction au poids reçues par le patin 6 et les forces d'arrachement que peut exercer un utilisateur qui se cramponne au volant 5. Ces forces peuvent être parallèles à l'axe XX', ou avoir une composante perpendiculaire. Grâce à ces deux épaulements 35 et 38, ces forces peuvent être absorbées sans que la direction ne soit bloquée et sans que les efforts ne soient transmis en une zone précise des parois 11 et 12. Au contraire, ces forces sont réparties sur toutes les surfaces de contact entre les collerettes 32 et 33 et les parois 11 et 12. Les efforts repris par les surfaces de contact sont absorbées par les nervures 16 et 16'.

Comme l'arbre 26 est venu de matière avec le patin 6 lors d'une opération de moulage, il est indispensable qu'une partie du moule pénètre dans l'arbre 26 pour obtenir un arbre creux, donc léger et de cofit de matière assez faible. La position du moule au niveau de la surface inférieure du patin 6 au cours du moulage a pour conséquence qu'un trou est formé dans cette surface. Selon une variante avantageuse de l'invention, ce trou est bouché par une garniture 40 fixée par tout moyen, par exemple clipsage ou emmanchement à force, sous le patin 6, ce qui facilite le glissement du patin sur la neige.

Il doit d'ailleurs être entendu que la description qui précède n'a été donnée qu'à titre d'exemple et qu'elle ne limite nullement le domaine de l'invention, défini par les revendications ci-jointes, dont on ne sortirait pas en remplaçant les détails d'exécution décrits par tous autres équivalents.

## Revendications

1. Article de glisse pour le sport ou le loisir destiné à permettre à un utilisateur de glisser sur une surface neigeuse, ledit article comportant un corps (1) présentant une double paroi (11, 12) et comprenant un trou (18, 19) dans lequel est disposée une partie (26) au moins d'un élément de direction (5, 6), caractérisé en ce qu'une entretoise est formée, autour de ladite partie (26) de l'élément de direction, par deux manchons (28, 29) insérés dans ledit trou, vissés l'un sur l'autre et munis chacun d'une collerette (32, 33) en appui sur une face (11, 12) dudit corps (1).

2. Article de glisse selon la revendication 1, caractérisé en ce qu'il comprend au moins une nervure (15, 16, 16') de rigidification obtenue par déformation de la paroi inférieure (12) dudit corps (1) sous une partie de la paroi supérieure (11) dudit corps.

3. Article de glisse selon la revendication 1, caractérisé en ce qu'il comprend au moins deux nervures (16, 16') de rigidification situées de part et d'autre dudit trou (18, 19).

4. Article de glisse selon l'une quelconque des revendications 1 à 3, caractérisé en ce que les deux feuilles (11, 12) de ladite paroi sont en contact au niveau de ladite nervure (15, 16, 16') de rigidification.

5. Article de glisse selon la revendication 1, caractérisé en ce que l'arbre de direction (26) d'un patin (6) est logé dans ladite entretoise (28, 29).

6. Article de glisse selon la revendication 5, caractérisé en ce que ledit axe de direction (26) est venu de matière avec ledit patin (6).

7. Article de glisse selon la revendication 5, caractérisé en ce que le manchon (28) dont la collerette (32) repose contre la paroi inférieure (12) dudit corps (1) est muni d'un épaulement (38) intérieur destiné à servir de butée axiale à un épaulement (35) externe dudit axe (26).

8. Article de glisse selon la revendication 5, caractérisé en ce que ledit patin (6) est muni d'une garniture (40) destinée à faciliter son glissement sur la neige.

9. Article de glisse selon l'une des revendications précédentes, caractérisé en ce que ladite double paroi (11, 12) est obtenue par soufflage.

10. Article de glisse selon la revendication 1, caractérisé en ce que ledit trou (18, 19) est matérialisé par des retours (20, 21) de la matière formant ladite double paroi (11, 12) vers l'intérieur dudit corps (1).

## Claims

1. Sliding device for sport or leisure intended to allow a user to slide over a snowy surface, the said devise including a body (1) having a double wall (11, 12) and comprising a hole (18, 19) in which a part (26) at least of a steering element (5, 6) is arranged, characterized in that a spacer is formed, around the said part (26) of the steering element, by two sleeves (28, 29) inserted in the said hole, screwed onto one another and each equipped with a collar (32, 33) bearing on a face (11, 12) of the said body (1).

2. Sliding device according to Claim 1, characterized in that it comprises at least one stiffening rib (15, 16, 16') obtained by deformation of the lower wall (12) of the said body (1) under a part of the upper wall (11) of the said body.

3. Sliding devise according to Claim 1, characterized in that it comprises at least two stiffening ribs (16, 16') located on either side of the said hole (18, 19).

4. Sliding device according to any one of Claims 1 to 3, characterized in that the two sheets (11, 12) of the said wall are in contact at the level of the said stiffening rib (15, 16, 16').

5. Sliding device according to Claim 1, characterized in that the steering shaft (26) of a runner (6) is housed in the said spacer (28, 29).

6. Sliding device according to Claim 5, characterized in that the said steering shaft (26) is made in a single piece with the said runner (6).

7. Sliding device according to Claim 5, characterized in that the sleeve (28), of which the collar (32) rests against the lower wall (12) of the said body (1), is equipped with an inner shoulder (38) intended to serve as an axial stop for an external shoulder (35) of the said shaft (26).

8. Sliding device according to Claim 5, characterized in that the said runner (6) is equipped with a coating (40) intended to facilitate its sliding over the snow.

9. Sliding device according to one of the preceding claims, characterized in that the said double wall (11, 12) is obtained by blow-moulding.

10. Sliding device according to Claim 1, characterized in that the said hole (18, 19) is embodied by returns (20, 21) of the material forming the said double wall (11, 12) towards the inside of the said body (1).

## Patentansprüche

1. Gleitvorrichtung für den Sport oder für die Freizeit, die einem Benutzer das Gleiten auf einer Schneefläche erlaubt, wobei die Vorrichtung einen Körper (1) umfaßt, der eine Doppelwand (11, 12) aufweist und ein Loch (18, 19) einbezieht, in dem ein Teil (26) mindestens eines Richtungselementes (5, 6) angeordnet ist,
**dadurch gekennzeichnet,**
daß eine Verbindungsversteifung um das Teil (26) des Richtungselementes durch zwei in das Loch eingepaßte Hülsen (28, 29) gebildet wird, die aufeinander geschraubt sind und jeweils mit einem Flansch (32, 33) zum Abstützen auf einer Fläche (11, 12) des Körpers (1) ausgerüstet sind.

2. Gleitvorrichtung nach Anspruch 1, dadurch gekennzeichnet, daß sie mindestens eine Versteifungsrippe (15, 16, 16') umfaßt, die durch Verformung der unteren Wand (12) des Körpers (1) unter einen Teil der oberen Wand (11) des Körpers erhalten wird.

3. Gleitvorrichtung nach Anspruch 1, dadurch gekennzeichnet, daß sie mindestens zwei Versteifungsrippen (16, 16') aufweist, die zu beiden Seiten des Lochs (18, 19) angeordnet sind.

4. Gleitvorrichtung nach Anspruch 1 bis 3, dadurch gekennzeichnet, daß die zwei Platten (11, 12) der Wand im Bereich der Versteifungsrippen (15, 16, 16') in Kontakt sind.

5. Gleitvorrichtung nach Anspruch 1, dadurch gekennzeichnet, daß die Lenkspindel (26) einer Kufe (6) in der Verbindungsversteifung (22, 29) aufgenommen ist.

6. Gleitvorrichtung nach Anspruch 5, dadurch gekennzeichnet, daß die Lenkachse (26) aus einem Material mit der Kufe (26) hergestellt ist.

7. Gleitvorrichtung nach Anspruch 5, dadurch gekennzeichnet, daß die Hülse (28), deren Flansch (32) auf der unteren Wand 12 des Körpers (1) ruht, mit einer nach innen gerichteten Schulter (38) versehen ist, die als axialer Anschlag für eine nach außen gerichtete Schulter (35) der Achse (26) dient.

8. Gleitvorrichtung nach Anspruch 5, dadurch gekennzeichnet, daß die Kufe (6) mit einer Kappe (40) versehen ist, die zur Erleichterung ihres Gleitens auf dem Schnee dient.

9. Gleitvorrichtung nach einem der vorhergehenden Ansprüche, dadurch gekennzeichnet, daß die Doppelwand (11, 12) durch ein Blasverfahren erhalten wird.

10. Gleitvorrichtung nach Anspruch 1, dadurch gekennzeichnet, daß das Loch (18, 19) durch Umbiegungen (20, 21) des die Doppelwand (11, 12) bildenden Materials ins Innere des Körpers (1) markiert ist.
